# EUROPEAN PATENT SPECIFICATION

(11) **EP 2 966 532 B1**
(45) Date of publication and mention of the grant of the patent: **17.06.2020**
(21) Application number: 14176585.9
(22) Date of filing: 10.07.2014
(51) Int. Cl.: G05D 7/06, G01F 15/00

(54) **Device for dispensing a predetermined amount of liquid from a tap**
Vorrichtung zum Abgeben einer vorbestimmten Menge einer Flüssigkeit aus einem Hahn
Dispositif pour distribuer une quantité prédéterminée de liquide à partir d'un robinet

(43) Date of publication of application: 13.01.2016
(73) Proprietor: Dejaegher, Michael, 8550 Zwevegem (BE)
(72) Inventor: Dejaegher, Michael, 8550 Zwevegem (BE)
(74) Representative: BiiP cvba

(56) References cited:
- EP-A2- 0 414 156
- EP-B1- 2 174 198
- DE-A1- 3 829 831
- DE-U1-202008 015 991
- US-A1- 2008 078 785

## Description

### Technical Field

The present invention concerns a device for dispensing a predetermined amount of liquid from a tap.

### Background for the Invention

In restaurants and at (domestic) caterers hygiene, speed of work and efficient use of ingredients and raw materials are key factors in prepared food quality and cost margins. Water is one of the most important raw materials in modern kitchens yet most often overlooked as a cost.

Due to the rather slow water flow rates in domestic taps and the large amounts of water needed for cooking or as an ingredient in some recipes, measuring an amount of water is often done by filling at a tap a (too large) amount of water in a bucket and subsequently filling a recipient with a required amount of water from that bucket. Such practice allows working fast and precise yet at the cost of spoiling water. More water spilling arises when the bucket is filled unattended at a tap especially because of the time required to fill a bucket, time (perhaps the most precious valuable in restaurants and at domestic caterers) that is usually spend more effectively for other tasks in the kitchen.

EP 21 741 98 discloses a device for mounting on a tap and allowing dispensing an amount of water equal to previously determined amounts of water. The disclosed device however does not allow dispensing a specific amount of water needed at a specific point in time but only allows dispensing amounts of water previously dispensed by the device during a learning phase. Although useful for filling a for example a bath such device is not practical in kitchens where the amount of water needed is highly dependent on the recipe and the amounts of a food product to be prepared.

DE 20 2008 015991 discloses a tap having a water dosing system integrated in the tap at the base of the tap line, upstream from the tap valve. However such tap allows dispensing a set amount of water, such tap has the inconvenience that the input unit is difficult to access when large objects such as buckets are placed under the tap, moreover, by placing the flow meter at the base of the tap, the amount of water remaining in the tap line after closing the valve is not precisely measured when dispensing, resulting in a potential inaccurate dispensing of the required amount of water, which especially in bakeries is inconvenient.

Another important requirement of devices for use in kitchens and especially when connected to a tap is that the devices are easy to clean to meet the high hygiene requirements for kitchens and that the devices are small not to obstruct the space under the tap and not to obstruct easy and fast handling of filled and thus heavy buckets and pots under the tap.

In addition, to be effectively useful in restaurants and at (domestic) caterers a device for dispensing a predetermined amount of water should be precise for both small volume (centilitres) to large volumes (litres) in order to precisely follow recipes, especially for pastries.

It is clear from the above that there remains a market need for compact, easy to clean and easy to handle tap connectable devices for dispensing a predetermined amount of water or other liquid without the need for closely surveying the dispensing.

### Summary of the Invention

The present invention is defined in the appended independent claims. Preferred embodiments are defined in the dependent claims. In particular the present invention concerns a device for dispensing a predetermined amount of liquid from a tap, the device comprising:
a) a housing;
b) a fluid channel comprising an inlet portion defining an inlet and an outlet portion defining an outlet, the inlet and outlet portions both extending in a same direction, said inlet comprising coupling means for releaseably coupling the inlet to the outlet of a tap, wherein said fluid channel comprises a flow meter having an electronic output and a valve switcheable between an open position and a closed position, wherein both the flow meter and the valve are accommodated in the housing;
c) an input panel coupled to a processor for the input of a value corresponding to the amount of liquid to be dispensed, wherein said processor is accommodated in the housing and coupled to the output of said flow meter and the to the valve, enabling switching the valve position in function of the input value and the electronic output of the flow meter;
d) a power supply means accommodated in the housing;
   wherein the ratio between the height H -measured in a direction wherein the inlet and outlet portions of the fluid channel extend between the inlet and outlet of the fluid channel-, over the maximum diameter of the device in a perpendicular to the height direction is comprised in a range of 0,5 to 1,5.

The device preferably has an inlet having an inner diameter of at least 0,8, preferably at least 1cm, most preferably at least 1,5 cm. The height of the device is preferably maximum 15 cm.

According to a preferred embodiment the fluid channel defines a non-straight pathway enclosed in said housing, said non-straight pathway comprising several sections, the flow meter accommodated in a first section and the valve accommodated in second section, the first and second section separated by a non-straight section of the fluid channel.

The power supply preferably comprises a battery or set of batteries.

The valve preferably is of a so-called flip-flop type comprising two stable states, ie. a stable open state and a stable closed state, whereby the valve is made to change from one stable state to the other stable state by a signal applied to its control input.

The coupling means for coupling the inlet to a tap are preferably of the type allowing releasably coupling the inlet to the tap outlet. More preferably the coupling means are free rotationally coupled to the inlet of the device, allowing rotation of the device in a plane perpendicular to the inlet direction around the tap when coupled thereto.

The housing is preferably manufactured in a material having anti-bacterial properties or is coated with an anti-bacterial coating. In addition it is preferred that the housing has an outer surface having a roughness of maximum...

It is further preferred that the device comprises a signal output unit actuated upon closing the valve.

### Brief Description of the Figures

Figures 1a and 1b represent a perspective view of a device according to the present invention with a partial cut-out of the housing showing a fluid channel comprising a flow meter and valve accommodated in the housing;
Figures 2a and 2b schematically shows the fluid channel of a device according to the invention;
Figure 3a and 3b schematically shows an alternative embodiment of figure 2;
Figure 4a and 4b schematically shows alternative embodiments of figures 2 and 3;
Figure 5a and 5b schematically shows alternative embodiments of figures 4a and 4b;
Figure 6a schematically shows an embodiment of the device from a side view;
Figure 6b shows a cross-sectional view of the device in Figure 5a along line A-A.

### Detailed Description of a Preferred Embodiment

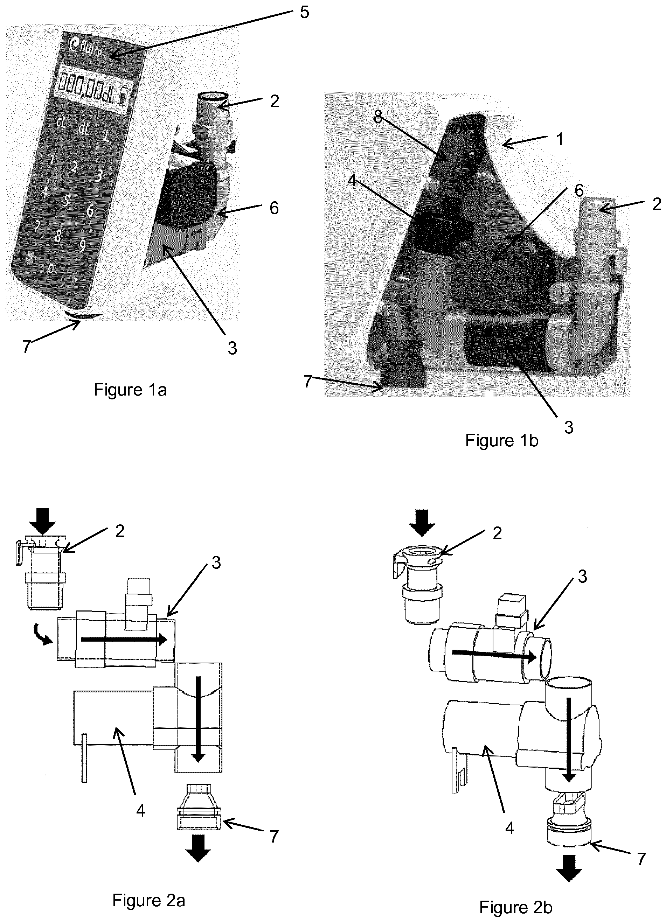

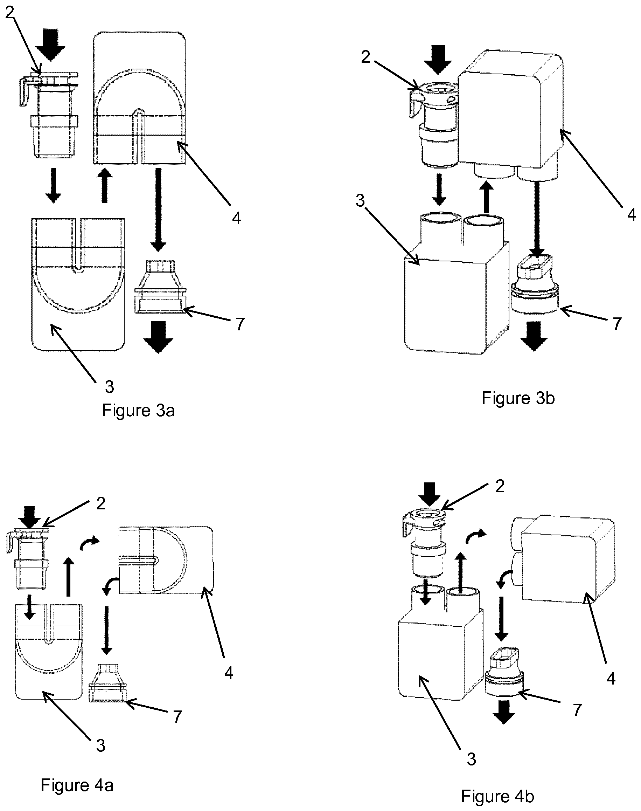

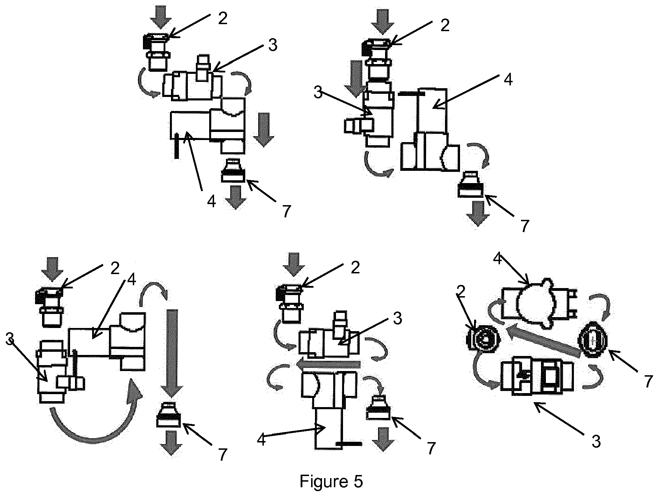

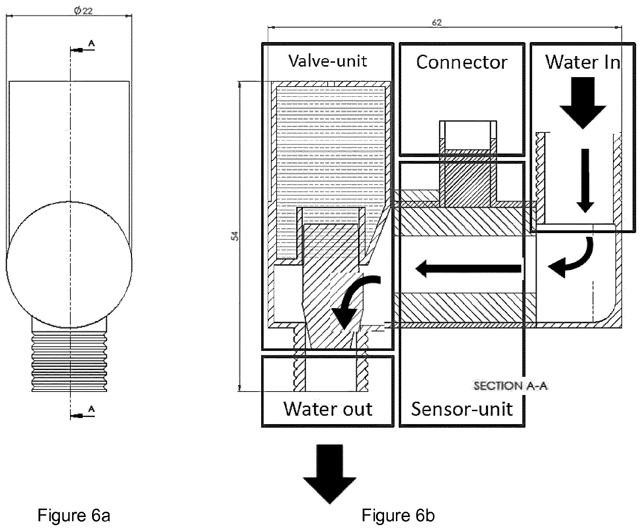

Figures 1-6 show a device according to the present invention for dispensing a predetermined amount of liquid from a tap. The device comprises a housing 1 accommodating a fluid channel comprising an inlet portion 2 defining an inlet and defining an outlet portion 7 defining an outlet. The inlet and outlet both extend in a same direction, in particular substantially parallel to the field of gravity when the device is correctly coupled to a tap.

The inlet portion 2 comprises coupling means 6 for releasably coupling the device to the outlet of a tap, said coupling means are preferably mounted to the device by means of a bush that is free in rotation vs the inlet of the fluid channel, such that the device can rotate around the tap outlet when mounted thereon. The inlet of the fluid channel preferably has an inner diameter of at least 0,8, preferably at least 1 cm.

The fluid channel is arranged in the housing to define a non-straight pathway defined by several sections provided between the inlet section and the outlet section. A first section of the fluid channel hereby accommodates a flow meter 3, whereas a second section of the fluid channel extending in another direction or other sense than the first section accommodates a valve 4, the flow meter and valve both being accommodated in the housing.

The flow-meter can be any type of meter allowing real-time measuring the flux of liquid, preferably tap water, through the fluid channel. Examples of flow meters comprise piston meters or rotary piston meters; pressure based meters; optical flow meters; open channel flow meters; thermal mass flow meters; vortex flow meters; electromagnetic meters; ultrasonic based flow meters; coriolis flow meters and or laser/Doppler flow meters. The flow meter comprises an electronic output unit with connector for generating and transmitting a signal based on the amount of water measured.

The valve is preferably a valve of the flip-flop type (bistable relay) characterized by two stable states (no power needed to maintain the valve in a stable state), in particular an open state wherein water can flow through the fluid channel and a closed state wherein the valve blocks water flow through the fluid channel, whereby the valve is made to change from one stable state to the other stable state by a signal applied to its control input.

It is clear that also other types of valves that can be used in a device according to the invention, such as for example solenoid valves, hydraulic valves, ball valves, gate valves, check valves, pressure reducing valves, relief valves, counterbalance valves, pressure sequence valves, expansion valves, ...

The housing further accommodates a power supply, preferably a power cell or set of power cells entirely enclosed in the housing, thereby avoiding the use of cables extending out of the housing.

Next to the flow-meter, valve and power supply, the housing also accommodates a processor that on the one hand is connected to an input panel provided in the housing and accessible (operable) from the outside thereof and on the other hand connected to the flow meter and the valve for actuation of the valve based on the input provided by the input panel and the output generated by the flow meter.

The input panel preferably comprises several push buttons or a capacitive screen allowing programming the device by inputting a volume of water to be dispensed and subsequently instructing the dispensing.

For ease of use, it is preferred that the input panel provides the option to input the desired volume in water in terms of centilitre, decilitre or litre. The input panel further preferably comprises a digit input for selecting a number corresponding to the volume of water to be dispensed, a start and a stop button.

Optionally, the housing can accommodate a small speaker coupled to the processor for generating an audio signal when the valve changes state from an open state to a closed state.

According to the present invention the housing is compact and has dimensions such that the ratio between the height H - measured in a direction wherein the input and output portions of the fluid channel extend (ie. in the direction of the force of gravity when the device is correctly coupled to a water tap) over the maximum diameter D of the device in a direction perpendicular to the height direction comprised between 0,5 and 1,5.

The height of the device is preferably maximum 15 cm.

The housing of the device is preferably manufactured in a material having anti-bacterial properties such as plastic with TiO₂ dispersed therein or can be coated with a coating having anti-bacterial properties. The outer surface of the housing preferably has a surface roughness of maximum 35 Ra, preferably maximum 30 Ra, 25 Ra or most preferably maximum 20 Ra, allowing thorough and easy cleaning. Ra is the "roughness average" specified in the ANSI/ASME standard B46.1-1985. The Ravalue relates to an arithmetic average of the surface roughness as measured by the stylus motion of an instrument.

The use of the device is both simple and straightforward.

In non-use mode, the valve of the device is in a closed state.

For use the device is coupled with its inlet to a water tap, preferably by means of releasable connector. Once connected the tap is opened and water is free to flow into the fluid channel upto the valve.

For dispensing a predetermined amount of water, a user chooses the centilitre, decilitre of litre mode and subsequently inserts the desired amount by pressing the number buttons on the input panel. By pressing the start button, a signal is forwarded to the processor that activates the flow meter and a signal is created actuating the valve from a closed to an open state. Water starts flowing from the tap, through the fluid channel to the outlet until the predetermined amount of water has passed the flow meter that generates a signal either directly or through the processor to the valve for closing the valve. Optionally, when the device comprises a small speaker, an audio signal is generated when the desired amount of tap water is dispensed to inform the user that the desired amount of water is available.

## Claims

1. A device for dispensing a predetermined amount of liquid from a tap, the device comprising:
a) a housing (1);
b) a fluid channel comprising an inlet portion (2) defining an inlet and an outlet portion (7) defining an outlet, the inlet and outlet portions both extending in a same direction, said inlet comprising coupling means (6) for coupling the inlet to the outlet of a tap, wherein said fluid channel comprises a flow meter (3) having an electronic output and a valve (4) switcheable between an open position and a closed position, wherein both the flow meter (3) and the valve (4) are accommodated in the housing;
c) an input panel (5) coupled to a processor (8) for the input of a value corresponding to the amount of liquid to be dispensed, wherein said processor is accommodated in the housing and coupled to the output of said flow meter and the to the valve, enabling switching the valve position in function of the input value and the electronic output of the flow meter (3);
d) a power supply means (6) accommodated in the housing;
wherein the ratio between the height H -measured in a direction wherein the inlet (2) and outlet portions (7) of the fluid channel extend between the inlet and outlet of the fluid channel-, over the maximum diameter of the device in a direction perpendicular to the height direction is comprised in a range of 0,5 to 1,5, **characterized in that** the fluid channel is arranged in the housing to define a non-straight pathway defined by several sections provided between the inlet section and the outlet section,
whereby a first section of the fluid channel hereby accommodates the flow meter (3), whereas a second section of the fluid channel extending in another direction or other sense than the first section accommodates a valve (4), the flow meter and valve both being accommodated in the housing.

2. The device according to claim 1, the inlet having an inner diameter of at least 0,8cm, preferably at least 1cm.

3. The device according to any of the preceding claims, the height of the device being maximum 15 cm.

4. The device according to any of the preceding claims, the power supply (6) comprising a battery or set of batteries.

5. The device according to any of the preceding claims, comprising a valve (4) of the so-called flip-flop type comprising two stable states, ie. a stable open state and a stable closed state, whereby the valve is made to change from one stable state to the other stable state by a signal applied to its control input.

6. The device according to any of the preceding claims, the coupling means for coupling the inlet to a tap are of the type allowing releasably coupling the inlet to the tap outlet.

7. The device according to any of the preceding claims, wherein the coupling means are free rotationally coupled to the inlet of the device, allowing rotation of the device in a plane perpendicular to the inlet direction around the tap when coupled thereto.

8. The device according to any of the preceding claims, wherein the housing is manufactured in a material having anti-bacterial properties or is coated with an anti-bacterial coating.

9. The device according to any of the preceding claims, wherein the housing has an outer surface having a roughness average of maximum 35 Ra according to the ANSI/ASME standard B46.1-1985

10. The device according to any of the preceding claims, comprising a signal output unit actuated upon closing the valve (4).

## Patentansprüche

1. Vorrichtung zur Abgabe einer vorbestimmten Flüssigkeitsmenge aus einem Hahn, die Vorrichtung umfassend:
a) ein Gehäuse (1);
b) einen Fluidkanal mit einem Einlassabschnitt (2), der einen Einlass definiert, und einem Auslassabschnitt (7), der einen Auslass definiert, wobei sich sowohl der Einlass- als auch der Auslassabschnitt in derselben Richtung erstrecken, wobei der Einlass Kopplungsmittel (6) zum Koppeln des Einlasses mit dem Auslass eines Hahns umfasst, wobei der Fluidkanal einen Durchflussmesser (3) mit einem elektronischen Ausgang und ein Ventil (4) umfasst, das zwischen einer offenen Position und einer geschlossenen Position umschaltbar ist, wobei sowohl der Durchflussmesser (3) als auch das Ventil (4) in dem Gehäuse untergebracht sind;
c) ein Eingabefeld (5), das mit einem Prozessor (8) für die Eingabe eines Wertes entsprechend der abzugebenden Flüssigkeitsmenge gekoppelt ist, wobei der Prozessor in dem Gehäuse untergebracht und mit dem Ausgang des Durchflussmessers und dem mit dem Ventil gekoppelt ist, wodurch das Umschalten der Ventilstellung in Abhängigkeit von dem Eingabewert und dem elektronischen Ausgang des Durchflussmessers (3) ermöglicht wird;
d) ein Stromversorgungsmittel (6), das in dem Gehäuse untergebracht ist;
wobei das Verhältnis zwischen der Höhe H - gemessen in einer Richtung, in der sich der Einlass- (2) und der Auslassabschnitt (7) des Fluidkanals zwischen dem Einlass und dem Auslass des Fluidkanals erstrecken - über den maximalen Durchmesser der Vorrichtung in einer Richtung senkrecht zur Höhenrichtung in einem Bereich von 0,5 bis 1,5 liegt, **dadurch gekennzeichnet, dass** der Fluidkanal in dem Gehäuse angeordnet ist, um einen ungeraden Weg zu definieren, der durch mehrere Abschnitte definiert ist, die zwischen dem Einlassabschnitt und dem Auslassabschnitt bereitgestellt sind, wobei ein erster Abschnitt des Fluidkanals hierdurch den Durchflussmesser (3) unterbringt, während ein zweiter Abschnitt des Fluidkanals, der sich in eine andere Richtung oder einen anderen Sinn als der erste Abschnitt erstreckt, ein Ventil (4) unterbringt, wobei sowohl der Durchflussmesser als auch das Ventil in dem Gehäuse untergebracht sind.

2. Vorrichtung nach Anspruch 1, wobei der Einlass einen Innendurchmesser von mindestens 0,8 cm, bevorzugt von mindestens 1 cm, aufweist.

3. Vorrichtung nach einem der vorstehenden Ansprüche, wobei die Höhe der Vorrichtung maximal 15 cm beträgt.

4. Vorrichtung nach einem der vorstehenden Ansprüche, wobei die Stromversorgung (6) eine Batterie oder einen Batteriesatz umfasst.

5. Vorrichtung nach einem der vorstehenden Ansprüche, umfassend ein Ventil (4) des sogenannten Flip-Flop-Typs umfassend zwei stabile Zustände, d.h. einen stabilen offenen Zustand und einen stabilen geschlossenen Zustand, wodurch bewirkt wird, dass das Ventil durch ein an seinen Steuereingang angelegtes Signal von einem stabilen Zustand in den anderen stabilen Zustand wechselt.

6. Vorrichtung nach einem der vorstehenden Ansprüche, wobei die Kopplungsmittel zum Koppeln des Einlasses mit einem Hahn von dem Typ sind, der eine lösbare Kopplung des Einlasses mit dem Hahnauslass ermöglicht.

7. Vorrichtung nach einem der vorstehenden Ansprüche, wobei die Kopplungsmittel frei drehbar mit dem Einlass der Vorrichtung gekoppelt sind, wodurch eine Drehung der Vorrichtung in einer Ebene senkrecht zur Einlassrichtung um den Hahn herum ermöglicht wird, wenn sie daran gekoppelt ist.

8. Vorrichtung nach einem der vorstehenden Ansprüche, wobei das Gehäuse aus einem Material mit antibakteriellen Eigenschaften hergestellt oder mit einer antibakteriellen Beschichtung beschichtet ist.

9. Vorrichtung nach einem der vorstehenden Ansprüche, wobei das Gehäuse eine Außenfläche mit einem Rauhigkeitsdurchschnitt von maximal 35 Ra gemäß der ANSI/ASME-Norm B46.1-1985 aufweist.

10. Vorrichtung nach einem der vorstehenden Ansprüche, umfassend eine Signalausgabeeinheit, die beim Schließen des Ventils (4) betätigt wird.

## Revendications

1. Dispositif pour distribuer une quantité prédéterminée de liquide à partir d'un robinet, le dispositif comprenant :
a) un boîtier (1) ;
b) a canal de fluide comprenant une portion d'entrée (2) définissant une entrée et une portion de sortie (7) définissant une sortie, les portions d'entrée et de sortie s'étendant toutes les deux dans une même direction, ladite entrée comprenant des moyens de couplage (6) pour coupler l'entrée à la sortie d'un robinet, dans lequel ledit canal de fluide comprend un débitmètre (3) présentant une sortie électronique et une soupape (4) pouvant être commutée entre une position ouverte et une position fermée, dans lequel à la fois le débitmètre (3) et la soupape (4) sont logés dans le boîtier ;
c) un panneau d'entrée (5) couplé à un processeur (8) pour l'entrée d'une valeur correspondant à la quantité de liquide à distribuer, dans lequel ledit processeur est logé dans le boîtier et couplé à la sortie dudit débitmètre et de à la soupape, permettant la commutation de la position de la soupape en fonction de la valeur d'entrée et de la sortie électronique du débitmètre (3) ;
d) un moyen d'alimentation électrique (6) logé dans le boîtier ;
dans lequel le rapport entre la hauteur H - mesurée dans une direction dans laquelle les portions d'entrée (2) et de sortie (7) du canal de fluide s'étend entre l'entrée et la sortie du canal de fluide -, au-delà du diamètre maximal du dispositif dans une direction perpendiculaire à la direction de hauteur est compris dans une plage de 0,5 à 1,5, **caractérisé en ce que** le canal de fluide est agencé dans le boîtier pour définir une trajectoire non rectiligne définie par plusieurs sections prévues entre la section d'entrée et la section de sortie, selon lequel une première section du canal de fluide loge par la présente le débitmètre (3), tandis qu'une seconde section du canal de fluide s'étendant dans une autre direction ou un autre sens que la première section loge une soupape (4), le débitmètre et la soupape étant tous deux logés dans le boîtier.

2. Dispositif selon la revendication 1, l'entrée présentant un diamètre interne d'au moins 0,8 cm, de préférence d'au moins 1 cm.

3. Dispositif selon l'une quelconque des revendications précédentes, la hauteur du dispositif étant au maximum de 15 cm.

4. Dispositif selon l'une quelconque des revendications précédentes, l'alimentation électrique (6) comprenant une batterie ou un ensemble de batteries.

5. Dispositif selon l'une quelconque des revendications précédentes, comprenant une soupape (4) du type appelé à bascule comprenant deux états stables, par exemple un état ouvert stable et un état fermé stable, selon lequel la soupape est faite pour se modifier d'un état stable à l'autre état stable par l'intermédiaire d'un signal appliqué à son entrée de commande.

6. Dispositif selon l'une quelconque des revendications précédentes, les moyens de couplage pour couple l'entrée à un robinet sont du type permettant un couplage amovible de l'entrée à la sortie de robinet.

7. Dispositif selon l'une quelconque des revendications précédentes, dans lequel les moyens de couplage sont couplés de manière rotative libre à l'entrée du dispositif, permettant la rotation du dispositif dans un plan perpendiculaire à la direction d'entrée autour du robinet lorsqu'il est couplé à celui-ci.

8. Dispositif selon l'une quelconque des revendications précédentes, dans lequel le boîtier est fabriqué dans un matériau présentant des propriétés antibactériennes ou est revêtu avec un revêtement antibactérien.

9. Dispositif selon l'une quelconque des revendications précédentes, dans lequel le boîtier présente une surface externe présentant une rugosité moyenne de maximum 35 Ra selon la norme ANSI/ASME B46.1-1985.

10. Dispositif selon l'une quelconque des revendications précédentes, comprenant une unité de sortie de signal déclenchée à la fermeture de la soupape (4).
